# EUROPÄISCHE PATENTSCHRIFT

(11) **EP 2 362 194 B1**
(45) Veröffentlichungstag und Bekanntmachung des Hinweises auf die Patenterteilung: **24.10.2012**
(21) Anmeldenummer: 11001444.6
(22) Anmeldetag: 22.02.2011
(51) Int. Cl.: G01G 11/00, G01G 17/02, G01G 17/04

(54) **Waage**
Scales
Balance

(30) Priorität: 27.02.2010 DE 102010009639
(43) Veröffentlichungstag der Anmeldung: 31.08.2011
(73) Patentinhaber: Bizerba GmbH & Co. KG, 72336 Balingen (DE)
(72) Erfinder: Hauck, Timo, 67663 Kaiserslautern (DE)
(74) Vertreter: Wagner, Jürgen

(56) Entgegenhaltungen:
- US-A- 3 623 559
- US-A- 4 108 344

## Beschreibung

Die Erfindung betrifft eine Waage zum Wiegen von vorzugsweise strangförmigem Wiegegut gemäß den Merkmalen des Oberbegriffs des Anspruchs 1.

Aus der EP 0 145 351 A2 ist eine solche Waage bekannt. Dort werden Teigstränge über ein Rollenförderband transportiert, wobei eine Rolle als Gewichtsaufnehmer ausgebildet ist. Das Gewichtssignal wird über die Zeit integriert und bei Erreichen eines voreingestellten Gesamtgewichts wird eine Schneidevorrichtung aktiviert, die den Teigstrang abschneidet.

In der EP 2 116 821 A1 ist ebenfalls eine Waage mit einem als Rolle ausgebildeten Gewichtsaufnehmer gezeigt. Ein Endlosförderband wird hier über beabstandete Umlenkrollen umlaufend geführt, wobei der Gewichtsaufnehmer zwischen den beabstandeten Umlenkrollen angeordnet ist und von dem Endlosband abgedeckt wird.

Der Erfindung liegt die Aufgabe zugrunde, eine Waage für strangförmiges und insbesondere flexibles Wiegegut zu schaffen, die kostengünstig zu fertigen ist und dabei eine hohe Genauigkeit aufweist.

Diese Aufgabe wird erfindungsgemäß durch eine Waage mit den Merkmalen des Anspruchs 1 gelöst.

Die Waage weist ein Zuführband zum Transport von strangförmigem Wiegegut wie z.B. Strängen aus Teig oder Hackfleisch und einen Gewichtsaufnehmer auf. Der Gewichtsaufnehmer weist zwei in Transportrichtung des Wiegeguts beabstandete Rollen auf, die in unterschiedlicher Höhe zueinander und im Vergleich zu der durch die Oberfläche des Zuführbands definierten Transportebene angeordnet sind.

Bei der Verwiegung von insbesondere strangförmigem Wiegegut, also Wiegegut welches in Transportrichtung länger als der Gewichtsaufnehmer ist, ergibt sich das Problem, dass bei einer Messung sich das Wiegegut vor und hinter dem Messaufnehmer bzw. der Rolle auf dem Transportband abstützt und es so zu einem Kraftnebenschluss kommen kann, der das Messergebnis negativ beeinflusst. Der Einfluss des Kraftnebenschlusses ist dabei von der Elastizität des Wiegeguts abhängig.

Über einen zweiten Messaufnehmer in Form einer in der Höhe versetzten Rolle lässt sich das Messergebnis deutlich verbessern. Die zweite Rolle prägt dem Wiegegut eine definierte Verformung ein, die ein Maß für die Elastizität oder Konsistenz des Wiegeguts darstellt. Durch Vergleich der Messwerte, dieser beiden als Messaufnehmer ausgebildeten Rollen in einer Auswertevorrichtung kann man diese Einflüsse bestimmen und eventuelle Fehler herausrechnen um die Genauigkeit der Messung zu verbessern.

So ein Vergleich kann beispielsweise durch eine Subtraktion der Messwerte und Auswertung der Differenz erfolgen. Bei der Subtraktion berücksichtigt die Auswertevorrichtung den zeitlichen Versatz der Messwerte, der durch den Transport des Wägeguts auftritt, indem die Auswertevorrichtung den von den beiden Rollen aufgenommenen Messkurven um den zeitlichen Versatz gegeneinander verschiebt und so übereinander legt. Der zeitliche Versatz ergibt sich als Quotient aus dem Abstand der beiden Rollen und der Transportgeschwindigkeit des Wägeguts.

In einer Ausführung ist auch vorgesehen, dass die Auswertevorrichtung Tabellen mit Korrekturfaktoren aufweist und anhand der berechneten Differenz einen Korrekturfaktor aus der Tabelle bestimmt und damit den ermittelten Gewichtswert korrigiert. Die Auswertevorrichtung kann aus dem Vergleich der Messwerte der beiden Rollen auch auf die Konsistenz oder die Elastizität des Wiegeguts bzw. Wägeguts schließen. Insbesondere kann so z.B. die Konsistenz eines zu wiegenden Teigstranges gemessen werden.

In einer Ausführung kann die Auswertevorrichtung anhand eines einzelnen Messwertes zu einem bestimmten Zeitpunkt durch Vergleich mit weiteren Messwerten zu anderen Zeitpunkten die Homogenität und/oder die Querschnittsfläche des Wiegeguts bestimmen. Insbesondere kann die Auswertevorrichtung durch Vergleich der Einzelmesswerte untereinander Abweichungen im Gewicht feststellen, die auf Inhomogenitäten, insbesondere Hohlräume oder Fremdeinschlüsse, im Wägegut oder auf einen von einem Sollwert abweichenden Querschnitt des Wägeguts hinweisen.

Es kann vorgesehen sein, dass die Auswertevorrichtung eine Anzeigevorrichtung aufweist und Abweichungen im Querschnitt oder Inhomogenitäten oder Informationen zu Elastizität oder Konsistenz des Wägeguts anzeigt oder an eine angeschlossene Steuereinrichtung oder Kontrolleinrichtung weiterleitet. Insbesondere kann eine Maschine zur Herstellung von Strängen aus Teig oder Hackfleisch über eine Schnittstelle der Auswerteeinrichtung gesteuert werden, um die Qualität oder Maßhaltigkeit der hergestellten Stränge zu verbessern.

Die Auswertevorrichtung ermittelt das Gesamtgewicht eines Wägeguts mit einem Integrator durch Integration vieler Einzelmesswerte, die bei dem Transport des Wiegeguts über den Gewichtsaufnehmer entstehen. Es ist vorgesehen, dass die Auswertevorrichtung einen Mikroprozessor aufweist, der die Auswertung steuert und die erforderliche Kommunikation mit Sensoren wie Wägezellen, Messaufnehmern oder externen Komponenten über Schnittstellen vornimmt.

Für eine genaue Gewichtsermittlung ist es notwendig, das Zeitfenster für eine Messung, entsprechend der Zeitdauer des Transports des Wiegeguts über den Gewichtsaufnehmer, exakt zu bestimmen. Insbesondere ist es erforderlich, den Startzeitpunkt und auch den Stoppzeitpunkt der Messung genau festzulegen. Das kann über zusätzliche Sensoren, insbesondere Lichtschranken erfolgen, oder durch Auswertung der Signale des Gewichtsaufnehmers selbst. Der Startzeitpunkt ist dabei der Zeitpunkt, zu dem das Wiegegut beginnt auf den Gewichtsaufnehmer aufzulaufen. Der Stoppzeitpunkt ist der Zeitpunkt, zu dem das Wiegegut den Gewichtsaufnehmer verlässt.

Es ist vorgesehen, dass das integral ermittelte Gewicht über in einem Speicher der Auswerteeinrichtung abgelegte Korrekturfaktoren auf das tatsächliche, statische Gewicht des Wiegeguts zurückgerechnet wird. Diese Korrekturfaktoren können in Abhängigkeit des eingestellten Filters und der Transportgeschwindigkeit experimentell ermittelt und in dem Speicher z. B. in Form einer Tabelle hinterlegt werden.

Die Auswertevorrichtung kann in einer Ausführung zusätzlich zu dem Integrator einen Differentiator aufweisen, und den Startzeitpunkt und/oder den Stoppzeitpunkt durch Vergleich des von dem Differentiator nach der Zeit abgeleiteten, also differentierten Gewichtssignals mit einem Schwellwert bestimmen. Dabei wird ein Schwellwert über eine Eingabevorrichtung eingestellt oder ein in einem Speicher abgelegter Schwellwert als Vergleichsgröße verwendet. Es ist vorgesehen, dass ein erster Schwellwert für den Startzeitpunkt und ein zweiter Schwellwert für den Stoppzeitpunkt verwendet werden, um eine verbesserte Genauigkeit zu ermöglichen.

Zur Bestimmung des Startzeitpunkts und/oder des Stoppzeitpunkts kann der Differentiator auch die zweite Ableitung des Gewichtssignals nach der Zeit bilden. Die Auswertevorrichtung kann die zweite Ableitung des Gewichtssignals verwenden, um einen Wendepunkt anhand des Nullpunkts der zweiten Ableitung als Startzeitpunkt und/oder Stoppzeitpunkt festzulegen.

Es ist auch vorgesehen, dass die Auswertevorrichtung den Startzeitpunkt und/oder den Stoppzeitpunkt durch die Auswertung des Vorzeichens des einfach differentierten Gewichtssignals in Kombination mit der Zeit bestimmt, indem das Vorliegen eines positiven Vorzeichens des differentierten Gewichtssignals über eine vorbestimmte, vorzugsweise einstellbare, Zeitspanne den Startzeitpunkt festlegt und /oder indem das Vorliegen eines negativen Vorzeichens des differentierten Gewichtssignals über eine vorbestimmte, vorzugsweise einstellbare, Zeitspanne den Stoppzeitpunkt festlegt. Über die Verknüpfung einer Zeitspanne mit der Bedingung des stetigen Ansteigens oder Abfallens des Gewichtssignals kann so der Beginn oder das Ende eines Messvorganges sicher festgelegt und damit der Startzeitpunkt bzw. der Stoppzeitpunkt der Messung bestimmt werden.

Die einzelnen Methoden zur Bestimmung des Startzeitpunkts und/oder des Stoppzeitpunkts können auch miteinander kombiniert werden. Insbesondere kann der Differentiator die erste Ableitung und die zweite Ableitung des Gewichtssignals gleichzeitig durchführen und der Auswertevorrichtung zur Verfügung stellen.

Weiter es ist in einer Ausführung vorgesehen, dass die Auswertevorrichtung einen oder mehrere Entlastungspunkte der Waage ermittelt und aus diesen Entlastungspunkten den Nullpunkt der Waage zu bestimmen und/oder einen Schwellenwert festzulegen. Der Entlastungspunkt wird dabei bestimmt, indem im Ruhezustand, also bei unbelasteter Waage der vom Gewichtsaufnehmer gelieferte Gewichtswert als Nullpunkt definiert und von der Auswertevorrichtung bei zukünftigen Messungen berücksichtigt wird. Der Entlastungspunkt kann auch im dynamischen Betrieb während des Wiegevorganges bestimmt werden, indem der vom Gewichtsaufnehmer gelieferte Gewichtswert zwischen zwei Wäge-Intervallen als Nullpunkt der Waage bzw. Entlastungspunkt definiert wird.

In einer verbesserten Ausführung ist es beispielsweise denkbar, dass dieser Entlastungswert, also der zum Entlastungspunkt gemessene Gewichtswert, von der Auswertevorrichtung in einem Speicher gespeichert wird. Anhand des Vergleichs vieler Entlastungspunkte über einen bestimmten Zeitraum hinweg, kann die Auswertevorrichtung ein Driften dieses Entlastungspunktes feststellen. Dieser Versatz (Drift) bei Entlastung tritt bspw. durch einen Drifteffekt der Wiegeeeinrichtung oder durch Produktablagerungen auf. Die Auswerteeinrichtung kann dann mittels linearer Näherungsfunktionen diese Nullpunktdrift errechnen und korrigieren, um dadurch das Messergebnis zu verbessern.

Der Differentiator und der Integrator können als elektronische Schaltung, insbesondere mit einem entsprechend beschalteten Operationsverstärker, oder als Software zur Signalverarbeitung ausgeführt sein.

Um auch bei unterschiedlichen Transportgeschwindigkeiten des Wägeguts möglichst genau wiegen zu können ist in einer Ausführung vorgesehen, dass die Auswertevorrichtung einen Eingang zur Eingabe der Transportgeschwindigkeit bzw. Bandgeschwindigkeit aufweist. An den Eingang kann auch ein Sensor, der die Transport- bzw. Bandgeschwindigkeit misst, angeschlossen sein. So kann die Auswertevorrichtung die Anzahl der Integrationsintervalle pro Zeiteinheit entsprechend der Geschwindigkeit anpassen.

Es ist vorgesehen, dass der Gewichtsaufnehmer als Rolle mit einem Durchmesser ausgebildet ist, der klein im Verhältnis zu der Länge der zu wiegenden Wiegegüter ist. In der Praxis hat sich ein Rollendurchmesser im Bereich von 15mm bis zu 75mm als Idealwert herausgestellt.

Eine Anwendung der erfindungsgemäßen Waage ist insbesondere im Lebensmittelbereich bei der Verwiegung von flexiblen strangförmigen Lebensmitteln, wie Teigsträngen oder Wurststrängen oder Hackfleisch vorgesehen. Jedoch ist auch eine Anwendung im Logistikbereich oder im Verpackungsbereich denkbar um beispielsweise Pakete unterschiedlicher Länge zu wiegen. Ein weiterer möglicher Anwendungsfall sind biegesteife Produkte (Bspw. Schokoriegel), die aufgrund ihrer gleichmäßigen Konsistenz und geometrischen Abmessungen für reproduzierbare Ergebnisse sorgen. Durch die raumsparende Ausgestaltung des Gewichtsaufnehmers als Rolle kann die Wiegevorrichtung bspw. in einer Produktionslinie zwischen die einzelnen Bearbeitungsstationen als In-ProzeßKontrolle angeordnet werden.

Weitere Ausführungsbeispiele der Erfindung sind in den Figuren dargestellt und der dazugehörenden Beschreibung beschrieben.

Es zeigen,
- Figur 1:: Eine schematische Darstellung der Waage;
- Figur 2:: Ein beispielhaftes Gewichtssignal einer Rolle des Gewichtsaufnehmers;
- Figur 3:: Ein beispielhaftes Gewichtssignal einer Rolle des Gewichtsaufnehmers beim Vermessen von zwei Wiegegütern.

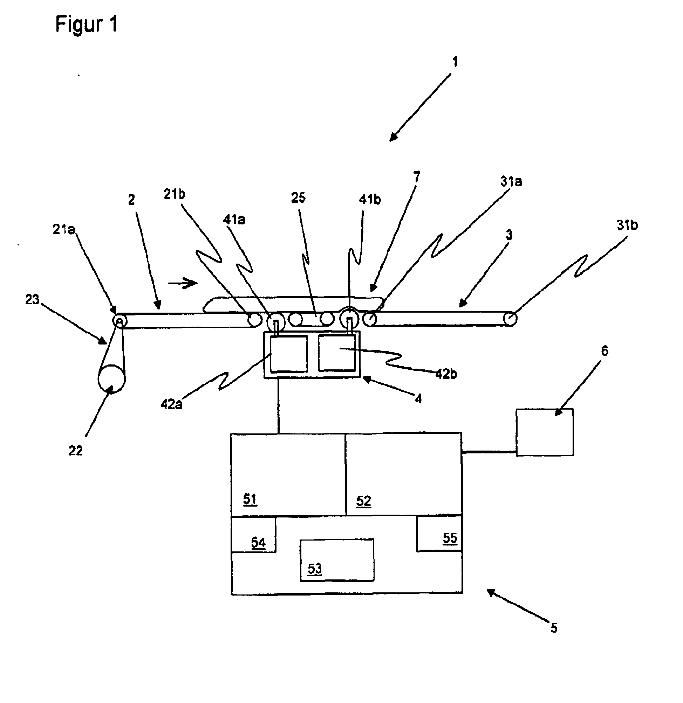

**Figur 1** zeigt eine Waage 1 mit einem Zuführband 2 und einem Abführband 3. Zwischen dem zuführband 2 und dem Abführband 3 ist ein Gewichtsaufnehmer 4 mit zwei in Transportrichtung beabstandeten Rollen 41a, 41b angeordnet. Die Rollen sind parallel zueinander ausgerichtet und weisen jeweils eine Drehachse auf, die im rechten Winkel zu der Transportrichtung ausgerichtet ist. Der Durchmesser beider Rollen 41a, 41b ist identisch und kann sich je nach Anwendung im Bereich von 15mm bis zu 75mm bewegen. Zwischen den Rollen 41a und 41b erstreckt sich ein Transportband 25. Dieses dient der Abstützung des flexiblen Wiegeguts 7. Die Oberflächen des Zuführbands 2 mit dem Transportband 25 und dem Abführband definieren eine ebene Transportfläche. Die erste Rolle 41a ist so angeordnet, dass deren obere Tangente in der Transportfläche liegt. Die zweite Rolle 41b ist im Vergleich zu der ersten Rolle 41a um eine Strecke nach oben versetzt angeordnet. Diese Strecke kann von 0,2mm bis zu 5mm betragen und wird von dem Fachmann anhand der jeweiligen Anforderungen eingestellt.

Die Komponenten der Waage sind auf einem der übersichtlichkeit wegen nicht dargestellten Gestell gehaltert. Das Zuführband 2 weist eine über einen Motor 22 mit Riementrieb 23 angetriebene Antriebsrolle 21a und eine Umlenkrolle 21b auf, über die ein Endlosband umlaufend geführt ist. Der Motor 22 weist einen Geschwindigkeitsgeber auf und gibt seine Geschwindigkeit über eine Sensorleitung an einen dafür vorgesehenen Eingang der Auswerteeinrichtung 5 weiter.

Das Wiegegut 7 wird von dem angetriebenen Zuführband 2 über die Rollen 41a, 41b in Pfeilrichtung auf das Abführband 3 transportiert. Dieses weist zwei Umlenkrollen 31a, 31b auf, über die ein Endlosband geführt ist. Das Abführband kann ebenfalls eine motorisch angetriebene Umlenkrolle zum Abtransport des Wiegeguts 7 aufweisen, oder ohne Antrieb ausgebildet sein und die Eigengeschwindigkeit des Wiegeguts 7 zum Abtransport nutzen.

Jede der Rollen 41a und 41b ist mit einer Wägezelle 42a bzw. 42b verbunden. Diese Wägezellen 42a, 42b können beispielsweise handelsübliche DMS(Dehnungsmesstreifen)- oder EMK (elektromagnetische Kraftkompensations)-wägezellen sein. Die Wägezellen liefern ihr Signal jeweils getrennt an eine Auswertevorrichtung 5, die beide Messsignale separat auswertet und verarbeitet. Die Auswertevorrichtung 5 weist einen Integrator 51, einen Differentiator 52, sowie einen einstellbaren Filter 53 und eine Verzögerungsschaltung 54 auf. Der Integrator 51, der Differentiator 52 sowie der Filter 53 weisen zwei Kanäle auf, so dass die Auswertevorrichtung 5 die Messsignale beider Wägezellen 42a und 42b zeitgleich bzw. parallel Verarbeiten kann. Über das Filter 53 werden die Messsignale geglättet, um z.B. über eine Tiefpassfilterung eine Rauschunterdrückung durchzuführen und ein verbessertes Messsignal zu erhalten. Die Verzögerungsschaltung 54 verschiebt die beiden Messkurven der Wägezellen 42a und 42b gegeneinander um die Zeit, die sich als Quotient aus dem Abstand der Rollen 41a und 41b und der Transportgeschwindigkeit des Wägeguts ergibt. Am Ausgang der Verzögerungsschaltung stehen beide Messkurven deckungsgleich an, so als ob die beiden beabstandeten Rollen 41a, 41b das Wiegegut 7 an derselben Stelle messen würden. Durch Subtraktion dieser Messkurven ermittelt die Auswertevorrichtung 5 die Differenz dieser Messignale um die Elastizität des Wägeguts 7 und/oder eventuell vorhandene Nebenkraftschlüsse zu ermitteln.

Die Auswertevorrichtung 5 weist weiter einen Speicher 55 auf, der als nichtflüchtiger, wiederbeschreibbarer Flash-Speicher ausgebildet ist und zur fortlaufenden Speicherung von Messwerten oder von Entlastungswerten dient.

Über einen als Bedien- und Anzeigevorrichtung 7 ausgebildeten Touch-Screen (berührungsempfindlicher Bildschirm) kann die Waage 1 bedient werden.

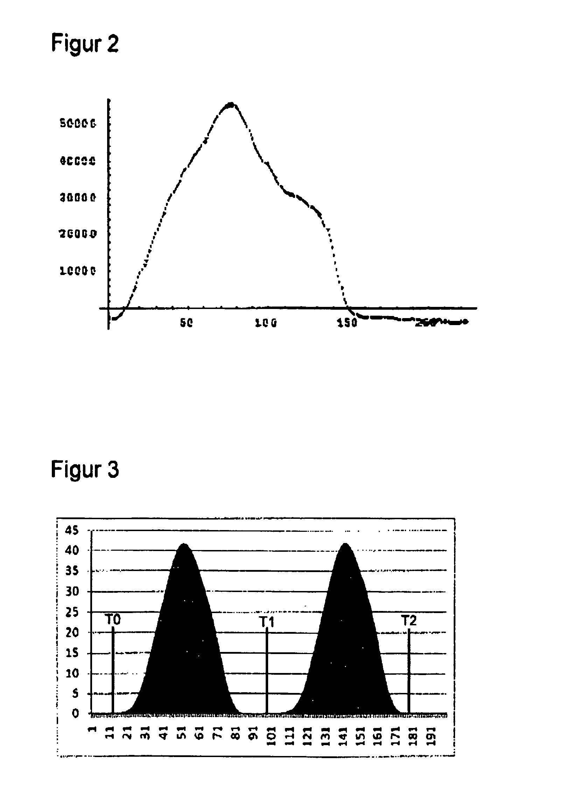

In **Figur 2** ist ein beispielhafter Verlauf des von dem Gewichtsaufnehmer 4 bei einer Verwiegung eines Wiegeguts gelieferten Gewichtssignals dargestellt. Auf der Abszisse sind die Gewichtswerte aufgetragen und auf der Ordinate der Zeitverlauf. Das Messfenster zur Gewichtsbestimmung reicht dabei von dem automatisch zu bestimmenden Startzeitpunkt bis zu dem ebenfalls automatisch zu bestimmenden Stoppzeitpunkt.

Beim Auflaufen des Wiegeguts auf eine Rolle steigt das Gewichtssignal stark an. Durch bilden der Ableitung des Gewichtssignals in dem Differentiator 52 kann dieser Anstieg detektiert und von der Auswertevorrichtung 5 als Startzeitpunkt für die Messung automatisch bestimmt werden. Mit dem Startzeitpunkt beginnt der Integrator 51 mit der Integration bzw. Aufsummierung des Gewichtssignals. Wenn das Wägegut gegen Ende der Messung von der Rolle abläuft, spiegelt sich dies in einem steilen Signalabfall wieder, der ebenfalls im Differentiator 52 einfach zu detektieren ist und somit die Auswertevorrichtung 5 den Stoppzeitpunkt für die Messung automatisch bestimmt. Mit Ende der Messung stoppt der Integrator 51 die Integration und das vorliegende Ergebnis des Integrators 51 stellt den Gewichtswert dar. Dabei wird das Gewicht dynamisch beim Überfahren jeder Rolle 41a oder 41b separat ermittelt. Dadurch erhält man zwei Gewichtswerte, die gegeneinander verrechnet werden können, um eventuelle Schwankungen des Messergebnisses zu verringern.

Die Rollen 41a und 41b sind erheblich kürzer als das Wiegegut und berühren dieses im Idealfall jeweils nur an einer Linie. Der zu einem Zeitpunkt anstehende Gewichtswert ist dabei ein Maß für das Gewicht des über der jeweiligen Rolle befindlichen Querschnitts des Wiegeguts 7. Etwaige Schwankungen des Querschnitts oder der Homogenität des Wiegeguts spiegeln sich in dem Verlauf des Messsignals während des Messvorganges wieder und lassen sich von der Auswertevorrichtung 5 einfach detektieren.

In **Figur 3** ist die beispielhafte Messkurve einer Rolle 41a des Gewichtsaufnehmers 4 beim Messen von zwei beabstandeten Wiegegütern gezeigt. Aus dieser Messkurve ermittelt die Auswertevorrichtung die Entlastungspunkte T0, T1 und T2. Die Auswertevorrichtung 5 bestimmt dazu die zeitliche Differenz zwischen zwei Messvorgängen und legt als Entlastungspunkt den jeweils gemessenen Gewichtswert in der Mitte zwischen den Messvorgängen fest. Diese Gewichtswerte speichert die Auswertevorrichtung 5 fortlaufend als Entlastungswert in dem Speicher 55. Anhand der Beobachtung einer Vielzahl dieser gespeicherten Entlastungswerten kann die Auswertevorrichtung 5 eine Langzeitdrift der Waage feststellen und/oder mittels linearer Näherungsfunktionen diese Drift errechnen und korrigieren. Dadurch kann ein gutes Messergebnis selbst bei einer langsam fortschreitenden Drift der Waage oder bei sich aufbauenden Produktablagerungen erreicht werden.

## Patentansprüche

1. Waage zum automatischen Wiegen von vorzugsweise strangförmigem Wiegegut, mit einem angetriebenen Zuführband (2) zum Transport des Wiegeguts zu einem Gewichtsaufnehmer (4),
**dadurch gekennzeichnet,**
**dass** der Gewichtsaufnehmer (4) zwei in Transportrichtung zueinander beabstandet angeordnete Rollen (41a, 41b) aufweist, die im Vergleich zu der Oberfläche des Zuführbandes (2) in jeweils unterschiedlicher Höhe angeordnet sind.

2. Waage nach Anspruch 1,
**dadurch gekennzeichnet,**
**dass** zur unabhängigen Erfassung von Gewichtswerten jede der Rollen (41a, 41b) mit jeweils einem eigenen Messaufnehmer (42a, 42b), der vorzugsweise jeweils als Wägezelle ausgebildet ist, verbunden ist.

3. Waage nach Anspruch 1 oder 2,
**dadurch gekennzeichnet,**
**dass** zwischen den beiden Rollen (41a, 41b) ein Transportband (25) angeordnet ist, dessen Oberfläche mit der Oberfläche des Zuführbandes (2) fluchtet.

4. Waage nach einem der Ansprüche 1 bis 3,
**dadurch gekennzeichnet,**
**dass** eine Rolle (41a) fluchtend mit dem Zuführband (2) angeordnet ist, indem die Verbindungslinie ausgehend von der Oberfläche des Zuführbands (2) mit der Oberfläche des Transportbandes (25) die Tangente der Rolle (41a) bildet.

5. Waage nach einem der vorhergehenden Ansprüche,
**dadurch gekennzeichnet,**
**dass** beide Rollen (41a, 41b) denselben Durchmesser aufweisen, vorzugsweise einen Durchmesser im Bereich von 15mm bis 75mm.

6. Waage nach einem der vorhergehenden Ansprüche,
**dadurch gekennzeichnet,**
**dass** eine Rolle (41b) um eine Strecke von 0,2mm bis 5mm höher als die andere Rolle (41a) angeordnet ist.

7. Waage nach einem der vorhergehenden Ansprüche,
**dadurch gekennzeichnet,**
**dass** eine Auswertevorrichtung (5) mit dem Gewichtsaufnehmer (4) verbunden ist, die einen Integrator (51) aufweist, der zur Bestimmung des Gesamtgewichts des Wiegeguts (7) das Signal des Gewichtsaufnehmers (4) über die Zeit integriert, wobei die Auswertevorrichtung (5) die Messsignale der beiden Rollen (41a, 41b) voneinander getrennt auswertet und miteinander verrechnet.

8. Waage nach Anspruch 7,
**dadurch gekennzeichnet**,
die Auswertevorrichtung (5) die Messsignale der beiden Rollen (41a, 41b) voneinander subtrahiert und die Differenz auswertet um die Konsistenz und/oder Elastizität des Wiegegutes (7) zu bestimmen.

9. Waage nach Anspruch 7 oder 8,
**dadurch gekennzeichnet,**
**dass** Auswertevorrichtung (5) die Messsignale der beiden Rollen(41a, 41b) voneinander subtrahiert und die Differenz auswertet um Nebenkraftschlüsse zu detektieren und/oder zu korrigieren.

10. Waage nach einem der vorhergehenden Ansprüche,
**dadurch gekennzeichnet,**
**dass** die Auswertevorrichtung (5) einen Differentiator (52) aufweist, der das Messsignal des Gewichtsaufnehmers (4) über die Zeit differentiert und die Auswertevorrichtung (5) den Startzeitpunkt und den Stoppzeitpunkt einer Messung anhand des differentierten Messsignals automatisch bestimmt.

11. Waage nach einem der vorhergehenden Ansprüche,
**dadurch gekennzeichnet,**
**dass** die Auswerteeinrichtung (5) durch Vergleich des zeitlichen Verlaufs der Messwerte des Gewichtsaufnehmers (4) Inhomogenitäten des Wägeguts (7) oder Abweichungen im Querschnitt des Wägeguts bestimmt und dies über eine Schnittstelle an eine Anzeigevorrichtung (6) und/oder externe Steuereinrichtung und/oder eine Fertigungsvorrichtung weiterleitet.

## Claims

1. Scale for automatically weighing preferably strand-shaped material to be weighed, having a driven supply belt (2) for transporting the material to be weighed to a weight transducer (4), **characterized in that** the weight transducer (4) has two rollers (41a, 41b), which are arranged to be spaced apart from one another in the transport direction and are arranged at respectively different heights as compared to the surface of the supply belt (2).

2. Scale according to Claim 1, **characterized in that** each of the rollers (41a, 41b) is connected to in each case one dedicated measurement transducer (42a, 42b), which is preferably configured in each case as a load cell, for independent capturing of weight values.

3. Scale according to Claim 1 or 2, **characterized in that** a transport belt (25) is arranged between the two rollers (41a, 41b), the surface of which transport belt (25) is flush with the surface of the supply belt (2).

4. Scale according to one of Claims 1 to 3, **characterized in that** a roller (41a) is arranged flush with the supply belt (2) by the connecting line, starting from the surface of the supply belt (2), forming the tangent of the roller (41a) with the surface of the transport belt (25).

5. Scale according to one of the preceding claims, **characterized in that** both rollers (41a, 41b) have the same diameter, preferably a diameter ranging from 15 mm to 75 mm.

6. Scale according to one of the preceding claims, **characterized in that** one roller (41b) is arranged higher by a distance of 0.2 mm to 5 mm than the other roller (41a).

7. Scale according to one of the preceding claims, **characterized in that** an evaluation apparatus (5) is connected to the weight transducer (4), which evaluation apparatus has an integrator (51) which integrates the signal of the weight transducer (4) over time in order to determine the overall weight of the material (7) to be weighed, wherein the evaluation apparatus (5) evaluates the measurement signals of the two rollers (41a, 41b) separately from one another and subjects them to mathematical manipulation.

8. Scale according to Claim 7, **characterized in that** the evaluation apparatus (5) subtracts the measurement signals of the two rollers (41a, 41b) from one another and evaluates the difference in order to determine the consistency and/or elasticity of the material (7) to be weighed.

9. Scale according to Claim 7 or 8, **characterized in that** the evaluation apparatus (5) subtracts the measurement signals of the two rollers (41a, 41b) from one another and evaluates the difference in order to detect and/or correct secondary frictional connections.

10. Scale according to one of the preceding claims, **characterized in that** the evaluation apparatus (5) has a differentiator (52), which differentiates the measurement signal of the weight transducer (4) over time, and the evaluation device (5) automatically determines the starting time and the stopping time of a measurement on the basis of the differentiated measurement signal.

11. Scale according to one of the preceding claims, **characterized in that** the evaluation device (5) determines, by comparing the temporal profile of the measurement values of the weight transducer (4), inhomogeneities of the material (7) to be weighed or deviations in cross section of the material to be weighed and transmits this via an interface to a display apparatus (6) and/or external control device and/or finishing apparatus.

## Revendications

1. Balance destinée à peser automatiquement des articles à peser se trouvant de préférence sous la forme de brins, au moyen d'une bande d'alimentation entraînée (2) destinée à transporter l'article à peser vers un capteur de poids (4), **caractérisée en ce que** le capteur de poids (4) comprend deux rouleaux espacés l'un de l'autre dans la direction de transport (41a, 41b) qui sont disposés à des hauteurs respectives différentes par comparaison à la surface de la bande d'alimentation (2).

2. Balance selon la revendication 1, **caractérisée en ce que** pour la détection indépendante de valeurs de poids, chacun des rouleaux (41a, 41b) est relié à son propre capteur de mesure (42a, 42b) qui est de préférence réalisé sous la forme d'une cellule de pesage.

3. Balance selon la revendication 1 ou 2, **caractérisée en ce qu'**entre les deux rouleaux (41a, 41b) se trouve une bande transporteuse (25) dont la surface est au même niveau que la surface de la bande d'alimentation (2).

4. Balance selon l'une quelconque des revendications 1 à 3, **caractérisée en ce qu'**un rouleau (41a) est disposé au même niveau que la bande d'alimentation (2) en faisant en sorte que la ligne de liaison forme à partir de la surface de la bande d'alimentation (2), avec la surface de la bande transporteuse (25), la tangente au rouleau (41a).

5. Balance selon l'une quelconque des revendications précédentes, **caractérisée en ce que** les deux rouleaux (41a, 41b) présentent le même diamètre, de préférence un diamètre se situant dans l'intervalle de 15 mm à 75 mm.

6. Balance selon l'une quelconque des revendications précédentes, **caractérisée en ce qu'**un rouleau (41b) est disposé plus haut de 0,2 mm à 5 mm que l'autre rouleau (41a).

7. Balance selon l'une quelconque des revendications précédentes, **caractérisée en ce qu'**un dispositif d'évaluation (5) est relié au capteur de poids (4), celui-ci présentant un intégrateur (51) qui intègre le signal du capteur de poids (4) au cours du temps pour déterminer le poids total de l'article à peser (7), dans lequel le dispositif d'évaluation (5) évalue de manière séparée les signaux de mesure des deux rouleaux (41a, 41b) et les compense mutuellement.

8. Balance selon la revendication 7, **caractérisée en ce que** le dispositif d'évaluation (5) soustrait l'un à l'autre les signaux de mesure des deux rouleaux (41a, 41b) et évalue la différence afin de déterminer la consistance et/ou l'élasticité de l'article à peser (7).

9. Balance selon la revendication 7 ou 8, **caractérisée en ce que** le dispositif d'évaluation (5) soustrait l'un à l'autre les signaux de mesure des deux rouleaux (41a, 41b) et évalue la différence afin de détecter et/ou de corriger des adhérences secondaires.

10. Balance selon l'une quelconque des revendications précédentes, **caractérisée en ce que** le dispositif d'évaluation (5) comprend un différentiateur (52) qui différencie le signal de mesure du capteur de poids (4) par rapport au temps et **en ce que** le dispositif d'évaluation (5) détermine automatiquement l'instant de début et l'instant de fin d'une mesure sur la base du signal de mesure différencié.

11. Balance selon l'une quelconque des revendications précédentes, **caractérisée en ce que** le dispositif d'évaluation (5) détermine des inhomogénéités de l'article à peser (7) ou des écarts de section transversale de l'article à peser par comparaison de l'évolution temporelle des valeurs de mesure du capteur de poids (4) et les transmet par l'intermédiaire d'une interface à un dispositif d'affichage (6) et/ou à un dispositif de commande externe et/ou à un dispositif de production.
